(19) Europäisches Patentamt / European Patent Office / Office européen des brevets

(11) **EP 2 814 202 A1**

(12) **DEMANDE DE BREVET EUROPEEN**

(43) Date de publication:
**17.12.2014 Bulletin 2014/51**

(51) Int Cl.:
**H04L 12/24** *(2006.01)*

(21) Numéro de dépôt: **13172086.4**

(22) Date de dépôt: **14.06.2013**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(71) Demandeur: **OpenTV Europe SAS
92130 Issy-les-Moulineaux (FR)**

(72) Inventeur: **Delpuch, Alain
75013 Paris (FR)**

(74) Mandataire: **Leman Consulting S.A.
Chemin de Précossy 31
1260 Nyon (CH)**

(54) **Système et méthode de maintenance à distance d unités d utilisateur**

(57) Un but du système et de la méthode de maintenance à distance selon l'invention est de permettre un diagnostic efficace de pannes d'unités d'utilisateur en un temps réduit. Chaque unité d'utilisateur, connectée à un serveur de gestion via un réseau de communication, transmet au serveur de gestion, des données d'états se rapportant à des paramètres de matériel et de logiciel associés à un mode de fonctionnement de l'unité d'utilisateur. La méthode comprend des étapes de stockage dans une mémoire de l'unité d'utilisateur des données d'états, de surveillance des données d'états stockées dans la mémoire et de détection d'au moins une donnée d'un état indiquant une panne de fonctionnement de l'unité d'utilisateur. Lorsqu'une panne est détectée, des données d'états correspondant à des états courants de l'unité d'utilisateur au moment de la panne et des données d'états correspondant à des états stockés pendant une période prédéterminée précédent la panne sont extraites de la mémoire et transmises au serveur de gestion qui détermine un coefficient de corrélation statistique entre les valeurs de chaque état d'une unité d'utilisateur avec les valeurs des états des autres unités d'utilisateur.

Fig. 1

EP 2 814 202 A1

**Description**

Domaine de l'invention

La présente invention concerne un système et une méthode de maintenance à distance d'unités d'utilisateur servant au traitement de données numériques de services multimédia diffusés capables de transmettre des données d'états à un serveur via une voie de retour. Plus particulièrement, lorsqu'une d'unité d'utilisateur détecte une panne de fonctionnement, elle transmet un ensemble de données d'états au serveur pour analyse afin de déterminer une cause probable de la panne.

Arrière plan technique

De nombreuses unités d'utilisateur évoluées telles que des décodeurs de télévision à péage, des ordinateurs personnels, des appareils de communication mobiles (téléphone portables, tablettes, etc.), des routeurs, des compteurs d'énergies, etc. connectées à un réseau de communication tel qu'Internet sont capables de transmettre des fichiers journal ou des historiques de fonctionnement à un serveur pour analyse. D'une manière générale, les fichiers journal sont transmis lorsque l'unité d'utilisateur subit une panne empêchant son fonctionnement attendu selon un mode donné. Par exemple, lors d'un dysfonctionnement d'un programme sur ordinateur, l'utilisateur peut être sollicité à transmettre ou non un fichier journal au fournisseur du programme ou du système d'exploitation de l'ordinateur. Ce fichier journal permet d'établir une statistique des pannes du programme servant en général de base lors de l'établissement de correctifs ou la création de programmes de mises à jour.

Le document WO2010/010586A1 décrit un système de surveillance en temps réel de l'état et du bon fonctionnement de diverses unités dans un réseau de communication. Le système utilise une connexion en temps réel pour interagir directement ou indirectement avec un système d'exploitation d'une unité du réseau afin d'obtenir un flux de message en temps réel pour traitement. Les messages du flux sont analysés et introduits dans une base de données dès qu'ils sont produits par une saisie en temps réel des données du flux dans un format adapté à la base de données. Le traitement et l'analyse des données basés sur des algorithmes prédéfinis sont ainsi effectués en temps réel sur le contenu stocké dans la base de données et résultent en une production de données d'états. Ces dernières sont utilisées pour détecter des défauts, générer des rapports, des alertes et des notifications. Le traitement des données d'états à l'aide d'une base de données de solutions permet au système de fournir à un utilisateur des recommandations utiles pour corriger les défauts ou des avertissements indiquant un état défectueux d'une unité du réseau.

Un tel système de surveillance en temps réel produisant des flux de messages en permanence peut surcharger le réseau de communication surtout lorsque des flux données de contenus de services audio / vidéo, par exemple, transitent via le même réseau. Une telle surcharge peut provoquer une baisse des performances du réseau, notamment une diminution de la largeur de bande ou du débit de données de contenus.

Description sommaire de l'invention

Le but de la présente invention est de pallier aux inconvénients des systèmes de surveillance en temps réel d'unités d'utilisateurs produisant en permanence des flux de données dans un réseau tout en permettant un diagnostic efficace de pannes en un temps réduit.

Ce but est atteint par un système de maintenance à distance d'unités d'utilisateur comprenant un serveur de gestion et une pluralité d'unités d'utilisateur connectées au serveur de gestion via un réseau de communication, chaque unité d'utilisateur étant configurée pour transmettre au serveur de gestion, via le réseau de communication, des données d'états se rapportant à des paramètres de matériel et de logiciel associés à un mode de fonctionnement de l'unité d'utilisateur, le système est caractérisé en ce que chaque unité d'utilisateur comprend :

- une mémoire destinée à stocker les données d'états de l'unité d'utilisateur comprenant des valeurs variables relatives à des états de l'unité d'utilisateur, des valeurs indiquant une transition d'une valeur initiale d'un état donné vers une valeur finale du même état et des données temporelles associées aux états,

- un module de surveillance des données d'états apte à détecter au moins une valeur d'un état spécifique ou une transition d'une valeur d'un état indiquant une panne de fonctionnement de l'unité d'utilisateur,

- un module de collecte et de transmission des données d'états destiné à être activé lorsqu'une panne est détectée par le module de surveillance, configuré pour extraire de la mémoire des données d'états correspondant à des états courants de l'unité d'utilisateur au moment de la panne,

et en ce que le serveur de gestion comprend un module de réception et d'analyse des données d'états transmises par chaque unité d'utilisateur, lesdites données d'états constituant un fichier journal, ledit module étant au moins configuré pour déterminer un coefficient de corrélation statistique résultant d'une comparaison des valeurs de chaque état de toutes les unités d'utilisateur avec les valeurs des autres états de toutes les unité d'utilisateur.

La présente invention se rapporte également à une méthode de maintenance à distance d'unités d'utilisateur connectées à un serveur de gestion via un réseau de communication, chaque unité d'utilisateur transmet au serveur de gestion, via le réseau de communication, des données d'états se rapportant à des paramètres de matériel et de logiciel associés à un mode de fonctionnement de l'unité d'utilisateur, la méthode est caractérisée en ce qu'elle comprend les étapes suivantes :

- stocker dans une mémoire de l'unité d'utilisateur les données d'états comprenant des valeurs variables relatives à des états de l'unité d'utilisateur, des valeurs indiquant une transition d'une valeur initiale d'un état donné vers une valeur finale du même état et des données temporelles associées aux états,

- surveiller les données d'états stockées dans la mémoire et détecter au moins une valeur d'un état spécifique ou une transition d'une valeur d'un état indiquant une panne de fonctionnement de l'unité d'utilisateur,

- lorsqu'une panne est détectée, extraire de la mémoire des données d'états correspondant à des états courants de l'unité d'utilisateur au moment de la panne,

- transmettre les données d'états au serveur de gestion et déterminer par le serveur de gestion un coefficient de corrélation statistique résultant d'une comparaison des valeurs de chaque état de toutes les unités d'utilisateur avec les valeurs des autres états de toutes les unités d'utilisateur.

Une unité d'utilisateur transmet des données d'états dès l'apparition d'une panne, d'une série de pannes sporadiques ou successives ou d'un défaut de fonctionnement indiqué par une valeur d'un état particulier ou par une transition d'une valeur initiale d'un état vers une valeur finale correspondant à une panne. Le serveur de gestion crée un fichier journal contenant les données d'états de chaque unité d'utilisateur et également une trace comportant des données d'états stockées portant sur une période de temps prédéterminée précédant la panne.

Les états se présentent sous plusieurs formes :

- des valeurs numériques variables selon le mode de fonctionnement de l'unité d'utilisateur comme le numéro du canal sélectionné, la température ou le taux de remplissage du disque dur, la qualité du signal etc. qui prennent diverses valeurs selon le fonctionnement de l'unité d'utilisateur.

- des chaînes de caractères alphanumériques comme des identifiants de carte à puce ou de module de sécurité, des identifiants de canaux ou d'applications, etc.

- des énumérations relatives à des états pouvant prendre un nombre N prédéfini de valeurs. Par exemple, pour N = 2, un état « crash » est représenté par une valeur binaire signalant un état de fonctionnement normal « crash = 0 » et un état indiquant une panne « crash = 1 »

Les états sont de préférence associés à des données temporelles comme la date et l'heure indiquant l'instant auquel s'est produit un événement particulier comme par exemple une panne ou une baisse soudaine de la qualité du signal ou une augmentation du temps de changement de canal. Une variation anormale d'une valeur numérique comme par exemple, lorsque le temps de passage d'un canal courant vers un autre canal augmente de manière significative, la valeur d'un état « zap time » dépasse un seuil prédéfini ce qui se traduit par une transition représentée par un état « slow zap» qui passe d'une valeur 0 à une valeur 1.

Le fichier journal contient donc pour chaque état une valeur associée à une donnée temporelle (date et heure) et une transition associée à une donnée temporelle indiquent la date et l'heure à laquelle a eu lieu la transition. Une transition reflète un passage d'un état d'une valeur initiale vers une valeur finale pouvant indiquer une panne et activer la transmission des données d'états au serveur de gestion.

Afin de permettre un traitement et une analyse statistique sous forme de tables et / ou de graphes, un grand nombre unités d'utilisateur, par exemple plusieurs milliers, transmettent au serveur de gestion un nombre élevé de données d'états, par exemple des données relatives à 100 voire 200 états se rapportant à une période de temps prédéfinie.

Les données d'états se rapportent à une sélection de paramètres de matériel et de logiciel associés au fonctionnement de l'unité d'utilisateur indépendante de la panne ou du défaut détecté par le module de surveillance. Ainsi pour différents types de pannes, le serveur de gestion peut recevoir des données d'états concernant une même sélection d'états ayant des valeurs différentes. La sélection d'états dépend d'une configuration du module de surveillance préétablie par le fabricant de l'unité d'utilisateur et / ou un opérateur habilité à la maintenance des unités d'utilisateur sélectionne des états à surveiller mis à disposition par un fournisseur des logiciels installés dans les unités d'utilisateur.

Le fichier journal retraçant le comportement des unités d'utilisateurs est destiné à être analysé par le serveur de gestion qui établit des corrélations en comparant les données d'états de chaque unité d'utilisateur. Par exemple, pour montrer que le temps de passage d'un canal courant vers un autre canal dépend du taux de remplissage du disque dur, la comparaison portera sur des unités d'utilisateurs ayant un disque dur avec différentes valeurs du taux de remplissage. L'analyse des résultats des corrélations sous forme de coefficients donne des indications utiles pour interpréter une panne dans le but de trouver sa cause et des solutions appropriées pour y remédier.

Les unités d'utilisateurs peuvent également transmettre des données d'états au serveur de gestion lorsque aucune panne n'est détecté par le module de surveillance par exemple après une requête du serveur ou de manière automatique à intervalles de temps prédéfinis. Ces données d'états d'unités d'utilisateur « saines » servent de référence lors de l'analyse d'un fichier journal pour déterminer une ou des origines de la panne.

Brève description de la figure

L'invention sera mieux comprise grâce à la description détaillée qui va suivre en se référant à la figure annexée qui est donnée à titre d'exemple nullement limitatif, à savoir:

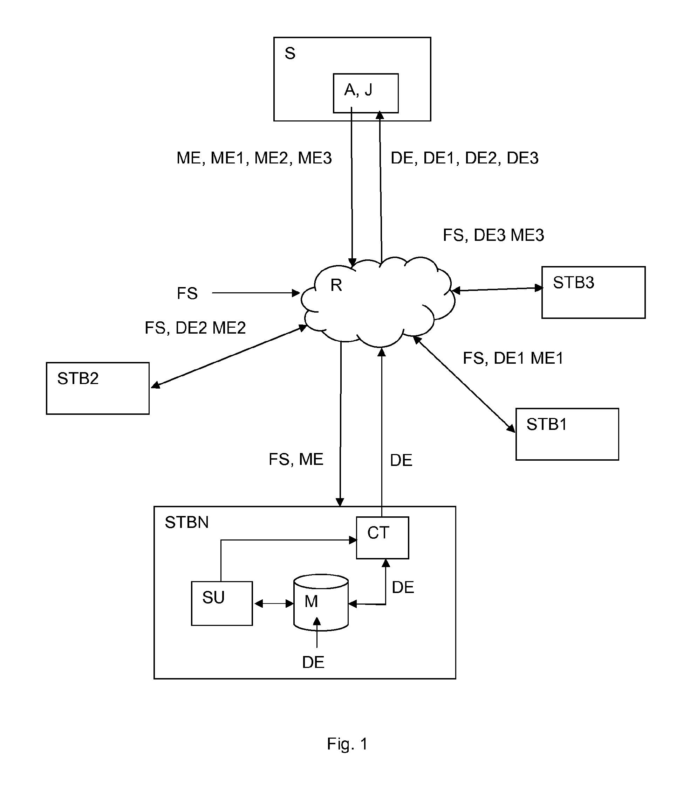

La figure 1 montre un schéma bloc du système selon l'invention comprenant des unités d'utilisateur qui transmettent chacune à un serveur de gestion des données d'états lorsqu'une panne est détectée.

Description détaillée de l'invention

Le système illustré par la figure 1 comprend une unité d'utilisateur STBN sous la forme d'un décodeur de télévision à péage appelé aussi set top box. Elle est connectée à un serveur de gestion S via un réseau de communication R. L'unité d'utilisateur STBN est configurée pour recevoir un flux FS de données numériques de services multimédia à partir du réseau R ou de tout autre réseau de diffusion câblé ou hertzien et pour transmettre au serveur de gestion S via le réseau R des données d'états DE par une voie de retour. D'autres unités d'utilisateurs STB1, STB2, STB3 configurées pour transmettre des données d'états DE1, DE2, DE3 lors de pannes sont également connectées au serveur de gestion S.

L'unité d'utilisateur STBN stocke dans une mémoire M des données d'états DE se rapportant à des paramètres de matériel et de logiciel associés à un mode de fonctionnement de l'unité d'utilisateur. Ces données d'états DE sont de préférence stockées lorsqu'un ou plusieurs états prédéfinis changent de valeur. Un module de surveillance SU est chargé de détecter une ou plusieurs données d'états DE indiquant une ou plusieurs pannes ou anomalies de fonctionnement qui se traduisant par des transitions d'états provoquant la transmission des données d'états DE au serveur de gestion S.

Le fichier journal J contenant les états des unités d'utilisateur avec leurs valeurs et les transitions associées à une date et une heure est converti par le serveur en transformant les transitions en états à deux valeurs 0 ou 1 de manière à permettre son analyse par corrélations. Par exemple, un passage brusque d'une valeur d'un état représentant le fonctionnement normal de l'unité d'utilisateur vers une valeur critique enregistré sous forme de transition est converti en un état « crash » dont la valeur 0 indique le fonctionnement normal et la valeur 1 une panne. Un état indiquant la capacité restante d'un disque dur qui atteint une valeur proche de zéro est converti en « disk full = 1 » indiquant un disque dur plein. Un état « slow zap = 1 » indiquant une faible vitesse de changement de canal résulte d'un état « zap speed » dont la valeur est inférieure à un seuil prédéfini.

Une panne ou défaut de fonctionnement est défini en général par une valeur relative à un état située au-delà ou en deçà d'une valeur limite prévue ou valeur de référence mesurée lors d'un fonctionnement normal de l'unité d'utilisateur. Le module de surveillance SU comporte des filtres et des comparateurs associés à une sélection d'états à surveiller. Une panne se traduit par une ou plusieurs valeurs d'états hors limites et / ou par un nombre anormalement élevé de valeurs d'états hors limites enregistrées dans la mémoire à de nombreux intervalles de temps, ou par une fréquence élevée d'avertissements relatifs à des états anormaux. Un état particulier, par exemple « crash », peut signaler une panne relative à un ensemble d'états.

Lorsqu'un état critique compromettant le fonctionnement normal d'une unité d'utilisateur comme par exemple « crash », « disk remaining capacity », « signal strength » etc. transite d'une valeur neutre vers une valeur active, le module de surveillance SU enclenche un module de collecte et de transmission CT qui recueille des ensembles de données d'états stockés dans la mémoire M .relatifs aux états surveillés par le module de surveillance SU et des ensembles de données d'états enregistrées pendant une période prédéfinie précédent la panne. Ces ensemble de données d'états sont ensuite transmis via le réseau de communication R au serveur de gestion S qui comporte un module d'analyse A chargé de les analyser.

Par exemple dans le fichier journal J, un état « crash = 1 » peut indiquer une panne lorsqu'une configuration d'états courants ne correspond pas à une configuration d'états relative à un fonctionnement conforme de l'unité d'utilisateur STBN défini par l'état « crash = 0 ».

Les données temporelles associées aux états indiquent non seulement la date et l'heure à laquelle une valeur d'état à été enregistrée dans la mémoire mais également la date et l'heure à laquelle une transition d'une valeur d'état initiale vers une valeur finale a eu lieu comme par exemple, la transition de l'état « crash » de 0 à 1. Certains états sont déterminés par des données temporelles d'autres états. Par exemple un état « zap speed » indiquant une faible vitesse de changement de canal de réception est déterminé par l'intervalle de temps entre un déclenchement d'un canal courant (état canal courant = 12) et l'enclenchement d'un nouveau canal (état nouveau canal 18). Lorsque cet intervalle de temps est supérieur à un intervalle de temps de référence l'état « zap speed » prend une valeur insuffisante par rapport à une valeur normale ce qui se traduit par l'état « slow zap = 1 » dans le fichier journal J. Cet intervalle de temps dépend de facteurs tel que : le temps de réaction de l'unité d'utilisateur à la télécommande, le temps de réglage du nouveau canal, le temps de réception et de connexion des tables de programme PAT, PMT, le temps de vérification d'accès conditionnel ou de contrôle parental, le temps d'affichage de la première image, etc. Tous ces facteurs peuvent également être représentés par des états surveillés par le module de surveillance SU et transmis au serveur de gestion S si nécessaire.

Selon une variante, la conversion des transitions en états à deux valeurs peut s'effectuer au niveau du module de surveillance SU de chaque unité d'utilisateur. Les données d'états sont alors transmises au serveur de gestion S par le module de collecte et de transmission CT lorsqu'un ou plusieurs de ces états à deux valeurs prennent une valeur 0 ou 1 indiquant une panne.

Selon une variante, à la réception de données d'états par le serveur de gestion S, le module d'analyse A de celui-ci peut transmettre à l'unité d'utilisateur STBN un message de réponse ME qui sera traité par le module de surveillance SU pour indiquer que la panne est prise en charge par le serveur de gestion S. Le message ME peut également indiquer les états de l'unité d'utilisateur STBN impliqués dans une panne, une cause probable de celle-ci, une solution ou un réglage particulier à effectuer sur l'unité d'utilisateur STBN pour résoudre la panne.

Selon une option, le serveur de gestion S peut envoyer à une ou plusieurs unités d'utilisateurs une requête comprenant une commande de transmission de données d'états enregistrées sur une période donnée concernant des états prédéfinis. Ces données d'états relatives à des unités d'utilisateur saines peuvent servir de référence pour une analyse de future de pannes. Selon une configuration, la requête envoyée par le serveur de gestion S peut activer le module de surveillance SU de la même manière qu'à l'apparition d'une ou plusieurs pannes de sorte que le module de collecte et de transmission CT transmette les données d'états. La transmission des données d'états peut être également sollicitée par le serveur de gestion S lorsqu'un utilisateur appelle l'opérateur de maintenance pour une résolution rapide d'une panne.

Le serveur de gestion S est également chargé de transmettre un fichier de configuration aux unités d'utilisateur comprenant une liste d'états à surveiller et à collecter, une liste des transitions de valeurs d'états pouvant activer la transmission de données d'états par le module de collecte et de transmission CT. Ce fichier de configuration peut également comporter des instructions de transmission indiquant par exemple une fréquence de transmission des données d'états (nombre de fois par heure, par jour, etc.), et/ou des instructions se rapportant à des états, des valeurs d'états ou des transitions de valeurs pouvant activer la transmission des données d'états sans pour autant indiquer une panne. Par exemple, des données d'états peuvent être transmises lorsque la température mesurée au niveau du disque dur dépasse 60°C. Les instructions du fichier de configuration permettent aussi de prévenir une saturation du serveur de gestion S due à un fichier journal de données d'états de grande taille provenant d'un million d'unités d'utilisateur par exemple. Dans ce cas, une probabilité (pourcentage) de transmission est associée à chaque type de transitions activant la transmission des données d'états. Par exemple, lorsque la température du disque dépasse 50°C, les données d'états sont transmises 5 fois sur 100 ou avec une probabilité de 5%.

Selon une configuration préférée, les données d'états comprennent, en sus des données d'états de l'unité d'utilisateur, au moins une information d'identification de l'unité d'utilisateur sous la forme d'un numéro de série unique, un identificateur d'un module de sécurité associé, une adresse MAC, une adresse IP, ou un identificateur d'un noeud de réseau comprenant l'unité d'utilisateur STBN. La personnalisation des données d'états permet au serveur de gestion S de transmettre des messages de réponse ME ciblés à destination des unités d'utilisateurs STBN concernées du réseau R.

Selon une autre variante, les données d'états peuvent être anonymes. Dans ce cas, elles contiennent de préférence une empreinte (Hash) calculée par l'unité d'utilisateur STBN à l'aide d'une fonction mathématique de hachage unidirectionnelle sans collision sur tout ou une partie des données des données d'états. Cette empreinte permet au serveur de valider les données d'états en comparant l'empreinte reçue avec une empreinte que le serveur de gestion S calcule sur les données d'états reçues de l'unité d'utilisateur STBN. Lorsque la comparaison est réussie les données d'états sont reconnues par le serveur de gestion S comme étant conformes et provenant d'une unité d'utilisateur STBN connectée au réseau de communication R.

Selon une autre variante, les données d'états contenant une information d'identification de l'unité d'utilisateur peuvent également inclure une empreinte (Hash) calculée sur tout or partie des données. En fonction du protocole de communication établi entre les unités d'utilisateur et le serveur de gestion, les données d'états sont déjà accompagnées par une empreinte comme par exemple dans le cas d'une transmission en mode TCP / http où les données transmises incluent un contrôle de redondance cyclique ou CRC.

De plus afin d'éviter des abus par des transmissions de données sensibles à des systèmes non autorisés, le serveur de gestion S est authentifié par des moyens connus et les données transmises via la voie de retour sécurisées. En particulier, les données d'états sont encryptées par l'unité d'utilisateur STBN à l'aide d'une clé de transmission connue du serveur de gestion S.

Afin de limiter le nombre d'unités d'utilisateur STBN appelant le serveur par la voie de retour sur la base de données d'états déjà reçues, la méthode de gestion de la voie de retour décrite dans le document US20050138667 peut être utilisée. Cette méthode permet de contrôler une voie de retour vers un système source dans un environnement de télévision interactive. Une indication basée sur des informations associées à l'environnement de télévision interactive est générée par le système source et diffusée à une pluralité de systèmes récepteurs où chaque système récepteur contrôle la voie de retour sur la base de l'indication de manière à éviter une saturation du serveur. Par exemple lorsqu'une application de réception radio tombe en panne 3 fois par jour sur un million de terminaux d'abonnés, le serveur recevrait 3 millions d'ensembles de données d'états sans l'indication de contrôle grâce à laquelle ce grand nombre d'ensembles peut être réduit au minimum nécessaire à l'établissement de statistiques. Autrement dit, lorsque des ensembles de données d'états sont transmis à une fréquence élevée, le serveur peut diminuer cette fréquence grâce à cette indication de contrôle.

Une telle indication est exprimée par une valeur numérique liée à une transition et à une probabilité de transmission des données d'états surveillée en temps réel par un ou plusieurs systèmes récepteurs dont chacun comparent l'indication avec une valeur aléatoire pour déterminer l'utilisation de la voie de retour. Ainsi, l'utilisateur bénéficie d'une qualité de service prévue car il peut obtenir un accès à la voie de retour lorsque le service est moins enclin à être refusé à cause d'une capacité insuffisante de la voie de retour sous la forme de manque de ressources de serveurs, de modems ou d'autres ressources système. L'indication peut être surveillée par un fournisseur de contenus qui peut changer le contenu interactif qui est diffusé aux systèmes récepteurs dans le but d'augmenter ou de diminuer la probabilité qu'un utilisateur tente d'utiliser la voie de retour.

L'exemple développé ci-après basé sur l'établissement de corrélations statistiques entre les données d'états illustre une réalisation préférée de l'invention.

L'unité d'utilisateur surveille 11 états DC1234, ST3456, SD, HD, MPG, AC3, subtitle (sous-titres), bookings (réservations de contenus), slow zap (commutation de programmes lente), crash (panne) et stand-by (mode veille) dont les données d'états forment les lignes du tableau 1. Ces lignes correspondent à 16 unités d'utilisateurs qui ont transmis chacune 11 états au serveur de gestion S, ces états étant préalablement extraits de leur mémoire M.

Lorsqu'une ou plusieurs pannes sont détectées par le module de surveillance SU, le module de collecte et de transmission CT récupère des données d'états d'une part d'unités d'utilisateurs en panne « crash = 1 » et d'autre part d'unités d'utilisateurs ne présentant aucune panne « crash = 0 », mais avec un état « slow zap = 1 » par exemple.

Dans le tableau 1, 8 unités d'utilisateurs désignées par les numéros 2, 4, 5, 7, 8, 12, 15 et 16 présentent des pannes qui sont indiquées (crash = 1) tandis que 8 autres ne présentent aucune panne « crash = 0 ». Les 16 ensembles de données d'états constituent ainsi un fichier journal J qui sera analysé par le serveur S en calculant des coefficients de corrélation statistique (tableau 2) résultant de comparaisons entres les valeurs des différents états des colonnes du tableau 1 prises deux par deux. Les entrées dans le tableau 2 donnent la corrélation des états des colonnes deux par deux.

Selon une configuration préférée du module de surveillance SU, lorsqu'un ensemble de données d'états est transmis au serveur S à l'apparition d'une ou plusieurs pannes, celui-ci est en général décalé vers un emplacement de la mémoire consécutif à celui utilisé pour stocker les données d'états courantes. Un historique des états est ainsi conservé pendant une période de temps prédéterminée au bout de laquelle de nouvelles données d'états remplacent les anciennes données d'états transmises au serveur. Ce remplacement peut également s'effectuer lorsqu'un nombre prédéterminé de décalages est atteint, nombre qui peut être fixé par exemple par le fichier de configuration que le serveur transmet aux unités d'utilisateurs.

Tableau 1 : exemples de données d'états relatives à quelques paramètres de fonctionnement ou états de 16 décodeurs numériques de télévision.

| Log # | DC1234 | ST3456 | SD | HD | MPG | AC3 | subtitle | bookings | slow zap | crash | stand-by |
|---|---|---|---|---|---|---|---|---|---|---|---|
| 1 | 1 | 0 | 0 | 1 | 1 | 0 | 0 | 6 | 1 | 0 | 0 |

(suite)

| Log # | DC1234 | ST3456 | SD | HD | MPG | AC3 | subtitle | bookings | slow zap | crash | stand-by |
|---|---|---|---|---|---|---|---|---|---|---|---|
| 2 | 0 | 1 | 1 | 0 | 0 | 1 | 1 | 4 | 1 | **1** | 0 |
| 3 | 1 | 0 | 1 | 0 | 1 | 0 | 0 | 5 | 1 | 0 | 0 |
| 4 | 0 | 1 | 1 | 0 | 0 | 1 | 1 | 1 | 0 | **1** | 0 |
| 5 | 0 | 1 | 0 | 1 | 0 | 1 | 1 | 6 | 1 | **1** | 0 |
| 6 | 1 | 0 | 1 | 0 | 0 | 1 | 0 | 7 | 1 | 0 | 0 |
| 7 | 1 | 0 | 1 | 0 | 1 | 0 | 1 | 2 | 0 | **1** | 0 |
| 8 | 0 | 1 | 0 | 1 | 0 | 1 | 1 | 1 | 0 | **1** | 0 |
| 9 | 1 | 0 | 0 | 1 | 1 | 0 | 0 | 6 | 1 | 0 | 0 |
| 10 | 0 | 1 | 0 | 1 | 0 | 1 | 1 | 4 | 1 | 0 | 0 |
| 11 | 0 | 1 | 1 | 0 | 0 | 1 | 0 | 3 | 1 | 0 | 0 |
| 12 | 0 | 1 | 1 | 0 | 0 | 1 | 1 | 0 | 0 | 1 | 0 |
| 13 | 1 | 0 | 1 | 0 | 0 | 1 | 0 | 6 | 1 | 0 | 0 |
| 14 | 0 | 1 | 1 | 0 | 1 | 0 | 0 | 4 | 1 | 0 | 0 |
| 15 | 0 | 1 | 1 | 0 | 1 | 0 | 1 | 2 | 0 | **1** | 0 |
| 16 | 0 | 1 | 0 | 1 | 0 | 1 | 1 | 4 | 0 | **1** | 1 |

Tableau 2 : coefficients de corrélation entre les données des états des colonnes du tableau 1

| | DC1234 | ST3456 | SD | HD | MPG | AC3 | subtitle | bookings | slow zap | crash | stand-by |
|---|---|---|---|---|---|---|---|---|---|---|---|
| **DC1234** | 1.00 | | | | | | | | | | |
| **ST3456** | -1.00 | 1.00 | | | | | | | | | |
| **SD** | 0.07 | -0.07 | 1.00 | | | | | | | | |
| **HD** | -0.07 | 0.07 | -1.00 | 1.00 | | | | | | | |
| **MPG** | 0.47 | -0.47 | 0.07 | 0.07 | 1.00 | | | | | | |
| **AC3** | -0.47 | 0.47 | -0.07 | 0.07 | -1.00 | 1.00 | | | | | |
| **subtitle** | -0.62 | 0.62 | -0.16 | 0.16 | -0.36 | 0.36 | 1.00 | | | | |
| **bookings** | 0.57 | -0.57 | -0.26 | 0.26 | 0.13 | -0.13 | **-0.63** | 1.00 | | | |
| **slow zap** | 0.33 | -0.33 | -0.07 | 0.07 | 0.07 | -0.07 | **-0.68** | **0.80** | 1.00 | | |
| **crash** | -0.52 | 0.52 | **0.00** | **0.00** | -0.26 | 0.26 | **0.88** | **-0.63** | **-0.77** | 1.00 | |
| **stand-by** | -0.20 | 0.20 | -0.33 | 0.33 | -0.20 | 0.20 | 0.23 | 0.02 | -0.33 | 0.26 | 1.00 |

Les coefficients de corrélation rp du tableau 2 sont calculés par le serveur S en utilisant la formule ci-dessous :

$$r_p = \frac{\sigma_{xy}}{\sigma_x \sigma_y} \qquad (1)$$

dans laquelle $\sigma_{xy}$ désigne la covariance entre les variables x et y, et $\sigma_x$, $\sigma_y$ l'écart-type de la variable x, respectivement de la variable y.

Dans l'exemple, le coefficient de corrélation rp se calcule entre deux séries x et y de même longueur contenant chacune 16 valeurs d'un état de chacune des 16 unités d'utilisateur de x ($x_1$,....,$x_{16}$) et de ($y_1$,...,$y_{16}$) des colonnes correspondant à chacun des 11 états (DCI234, ST3456, SD, HD, MPG, AC3, subtitle, bookings, slow zap, crash et stand-by) du tableau 1.

La covariance entre les variables x et y $\sigma_{xy}$ se calcule de la manière suivante

$$\sigma_{xy} = \frac{1}{N} \sum_{i=1}^{N} (x_i - \overline{x}).(y_i - \overline{y}) \quad (2)$$

où l'indice i évolue de 1 à N = 16 qui est le nombre d'ensembles d'états de chacune des 16 unités d'utilisateur pris en compte et où :

$$\overline{x} = \frac{1}{N} \sum_{i=1}^{N} x_i \quad \text{est la moyenne des valeurs de x} \quad (3)$$

$$\overline{y} = \frac{1}{N} \sum_{i=1}^{N} y_i \quad \text{est la moyenne des valeurs de y} \quad (4)$$

Les écarts-types $\sigma_x$ et $\sigma_y$ se calculent de la manière suivante :

$$\sigma_x = \sqrt{\frac{1}{N} \sum_{i=1}^{N} (x_i - \overline{x})^2} \quad (5)$$

$$\sigma_y = \sqrt{\frac{1}{N} \sum_{i=1}^{N} (y_i - \overline{y})^2} \quad (6)$$

La formule de départ (1) devient la suivante en remplaçant $\sigma_{xy}$, $\sigma_x$ et $\sigma_y$ selon les définitions (2) à (6) ci-dessus :

$$r_p = \frac{\sum_{i=1}^{N} (x_i - \overline{x}).(y_i - \overline{y})}{\sqrt{\sum_{i=1}^{N} (x_i - \overline{x})^2} . \sqrt{\sum_{i=1}^{N} (y_i - \overline{y})^2}} \quad (7)$$

Le coefficient de corrélation rp ainsi calculé prend des valeurs comprises entre -1 et +1, avec les valeurs extrêmes -1 et +1 comprises.

Le coefficient de corrélation rp est égal à +1 dans le cas où l'une des variables x ou y est une fonction croissante de l'autre variable y ou x. Il est égal à -1 dans le cas où la fonction est décroissante. Les valeurs intermédiaires renseignent sur le degré de dépendance linéaire entre les deux variables x et y. Plus le coefficient rp est proche des valeurs extrêmes -1 et +1, plus la corrélation entre les variables est forte. Un coefficient de corrélation rp égale à 0 signifie que les variables x et y ne sont pas corrélées donc indépendantes l'une de l'autre.

Un coefficient de corrélation négatif proche de -1 peut indiquer une forte corrélation de la même manière qu'un coefficient positif proche de +1 en fonction de la valeur des états concernés. En effet un état indiquant par exemple un taux de remplissage d'un disque dur de 40% est complémentaire à un état indiquant l'espace restant de 60% du même disque Des corrélations effectuées entre ces états complémentaires avec d'autres états auront des mêmes coefficients mais avec des signes opposés.

Dans le tableau 2, le coefficient de corrélation rp entre les états « subtitle » et « crash » est de 0.88 proche de +1. Cela signifie que les pannes indiquées par « crash = 1 » sont certainement liées à l'utilisation de sous-titres lors de la visualisation de programmes. Par exemple, les sous-titres sont illisibles, incomplets ou déplacés à cause de paquets de données manquants dans le flux diffusé des sous-titres associés au programme en cours de visualisation.

Le coefficient de corrélation 0.8 entre les états « booking » et « slow zap » également proche de +1 montre que lorsque le nombre de réservations augmente, la vitesse de commutation d'un programme à un autre diminue. Une cause probable de cette faible vitesse de commutation serait un grand nombre de réservations effectuées et/ou un rythme insuffisant de diffusion de tables de programmes PMT et / ou de tables d'informations d'événement EIT.

Les pannes « crash » sont indépendantes du mode de fonctionnement de l'unité d'utilisateur en haute définition (HD) ou en définition standard (SD), le coefficient de corrélation étant égal à 0.

Dans cet exemple, les pannes « crash » ne sont pas expressément liées au nombre de réservations « booking* » et à la faible vitesse de commutation d'un programme à un autre « slow zap » car leur coefficient de corrélation respectifs est négatif de -0.63 respectivement de -0.77. Autrement dit, les états « booking* » et « slow zap » ne sont pas directement concernés par la panne « crash = 1 ».

Un coefficient de corrélation élevé (proche de -1 ou de +1) n'implique pas nécessairement une relation de causalité entre les deux états mesurés. En effet les deux états peuvent être corrélés à un même état initial sous forme d'un troisième état non mesuré dont dépendent les deux autres. Dans ce cas, le coefficient de corrélation, tout en indiquant les états impliqués dans la panne, donne aussi une indication d'une direction dans laquelle une cause de la panne est à rechercher.

L'ajout de mesures d'autres états qui peuvent n'avoir aucun rapport avec les états mesurés auparavant, comme par exemple la mesure d'états lors d'un autre mode de fonctionnement de l'unité d'utilisateur tel que le mode veille, le mode de réception DVB (Digital Video Broadcast) ou IP (Protocole Internet), le mode interactif etc. peut parfois s'avérer utile pour établir des corrélations plus appropriées.

La détermination de coefficients de corrélation comme dans l'exemple ci-dessus permet d'établir rapidement et de simplifier l'interprétation des liens entre les états de l'unité d'utilisateur afin de cibler la recherche d'une cause de la ou des pannes détectées.

Cet avantage devient important lorsque le serveur traite un très grand nombre d'unités d'utilisateur pour lesquelles, il établit également des statistiques de pannes et des historiques d'état. De plus, des paramètres externes aux unités d'utilisateurs tels que l'état global du réseau de communication, le niveau et la qualité des signaux transmis, de la largeur de bande ou le débit de données, la charge etc. peuvent également être corrélés avec des états représentant le comportement d'une unité d'utilisateur ou d'un groupe d'unités d'utilisateurs. Par exemple une grande charge du réseau peut dégrader la qualité de la réception de programmes en haute définition qui se traduit par des pannes « crashes » liées par exemple aux états « HD », « slow zap », ou à un décodage trop lent se traduisant par un affichage d'images incomplet et / ou saccadé.

**Revendications**

**1.** Système de maintenance à distance d'unités d'utilisateur comprenant un serveur de gestion S et une pluralité d'unités d'utilisateur STB1, ...STBN connectées au serveur de gestion S via un réseau de communication R, chaque unité d'utilisateur STBN étant configurée pour transmettre au serveur de gestion S, via le réseau de communication R, des données d'états DE se rapportant à des paramètres de matériel et de logiciel associés à un mode de fonctionnement de l'unité d'utilisateur STBN, le système est **caractérisé en ce que** chaque unité d'utilisateur STBN comprend :

- une mémoire M destinée à stocker les données d'états DE de l'unité d'utilisateur STBN comprenant des valeurs variables relatives à des états de l'unité d'utilisateur STBN, des valeurs indiquant une transition d'une valeur initiale d'un état donné vers une valeur finale du même état et des données temporelles associées aux états,
- un module de surveillance SU des données d'états DE apte à détecter au moins une valeur d'un état spécifique ou une transition d'une valeur d'un état indiquant une panne de fonctionnement de l'unité d'utilisateur STBN,

- un module de collecte et de transmission CT des données d'états DE destiné à être activé lorsqu'une panne est détectée par le module de surveillance SU, configuré pour extraire de la mémoire M des données d'états DE correspondant à des états courants de l'unité d'utilisateur STBN au moment de la panne,

et **en ce que** le serveur S de gestion comprend un module de réception et d'analyse A des données d'états DE transmises par chaque unité d'utilisateur STBN lesdites données d'états DE constituant un fichier journal J, ledit module A étant au moins configuré pour déterminer un coefficient de corrélation statistique résultant d'une comparaison des valeurs de chaque état de toutes les unités d'utilisateur avec les valeurs des autres états de toutes les unités d'utilisateur.

2.  Système selon la revendication 1 **caractérisé en ce que** le module de collecte et de transmission CT des données d'états DE transmets des données d'états DE correspondant à des états stockés pendant une période prédéterminée précédent la panne en sus des états courants de l'unité d'utilisateur STBN au moment de la panne.

3.  Système selon la revendication 1 ou 2 **caractérisé en ce que** le module de réception et d'analyse A du serveur de gestion S est configuré de manière à déterminer des relations entre les données d'états DE du fichier journal J à partir d'un coefficient de corrélation statistique rp entre une série x de valeurs d'un état de chaque unité d'utilisateur et une série y de valeurs d'un autre état de chaque unité utilisateur.

4.  Système selon la revendication 3 **caractérisé en ce que** le coefficient de corrélation statistique rp ayant une valeur proche des valeurs extrêmes de +1 ou de - 1 indique des états impliqués dans la panne.

5.  Système selon l'une quelconque des revendications 1 à 4 **caractérisé en ce que** le serveur de gestion S transmet au moins un message de réponse ME issu du module d'analyse A à l'unité d'utilisateur STBN, ledit message de réponse ME indiquant que la panne détectée par le module surveillance SU est prise en charge par le serveur de gestion S.

6.  Système selon la revendication 5 **caractérisé en ce que** le message de réponse ME indique les états de l'unité d'utilisateur STBN impliqués dans une panne, une cause probable de ladite panne, une solution ou un réglage particulier à effectuer sur l'unité d'utilisateur STBN pour résoudre la panne.

7.  Système selon l'une quelconque des revendications 1 à 6 **caractérisé en ce que** le serveur de gestion S transmet à une ou plusieurs unités d'utilisateurs STBN un fichier de configuration comprenant une liste d'états à surveiller et à collecter, une liste des transitions de valeurs d'état pouvant activer la transmission de données d'états par le module de collecte et de transmission CT, des instructions de transmission se rapportant à des états, des valeurs d'états ou des transitions de valeurs pouvant activer la transmission de données d'états sans pour autant indiquer une panne.

8.  Système selon l'une quelconque des revendications 1 à 7 **caractérisé en ce que** les données d'états DE comprennent en sus des valeurs d'état de l'unité d'utilisateur STBN au moins une information d'identification de l'unité d'utilisateur STBN.

9.  Système selon l'une quelconque des revendications 1 à 7 **caractérisé en ce que** les données d'états DE sont anonymes.

10. Système selon l'une des revendications 8 ou 9 **caractérisé en ce que** les données d'états DE contiennent une empreinte (Hash) calculée par l'unité d'utilisateur STBN à l'aide d'une fonction mathématique de hachage unidirectionnelle sans collision sur tout ou une partie des données d'états, ladite empreinte étant destinée à une validation desdites données par le serveur de gestion S.

11. Système selon l'une quelconque des revendications 1 à 10 **caractérisé en ce que** les données d'états DE sont encryptées par l'unité d'utilisateur STBN à l'aide d'une clé de transmission connue du serveur de gestion S.

12. Système selon l'une quelconque des revendications 1 à 11 **caractérisé en ce que** le module de surveillance SU est configuré de manière à re-écrire dans la mémoire M de nouvelles données d'états DE à la place de données d'états antérieures lorsqu'un fichier journal J est transmis au serveur S à l'apparition d'une ou plusieurs pannes.

13. Méthode de maintenance à distance d'unités d'utilisateur connectées à un serveur de gestion via un réseau de communication, chaque unité d'utilisateur STBN transmet au serveur de gestion S, via le réseau de communication R, des données d'états DE se rapportant à des paramètres de matériel et de logiciel associés à un mode de fonctionnement de l'unité d'utilisateur STBN, la méthode est **caractérisée en ce qu'**elle comprend les étapes suivantes :

- stocker dans une mémoire M de l'unité d'utilisateur STBN les données d'états DE comprenant des valeurs variables relatives à des états de l'unité d'utilisateur STBN, des valeurs indiquant une transition d'une valeur initiale d'un état donné vers une valeur finale du même état et des données temporelles associées aux états,
- surveiller les données d'états stockées dans la mémoire M et détecter au moins une valeur d'un état spécifique ou une transition d'une valeur d'un état indiquant une panne de fonctionnement de l'unité d'utilisateur STBN,
- lorsqu'une panne est détectée, extraire de la mémoire M des données d'états DE correspondant à des états courants de l'unité d'utilisateur STBN au moment de la panne,
- transmettre les données d'états au serveur de gestion S et déterminer par le serveur de gestion S un coefficient de corrélation statistique résultant d'une comparaison des valeurs de chaque état de toutes les unités d'utilisateur avec les valeurs des autres états de toutes les unité d'utilisateur.

14. Méthode selon la revendication 13 **caractérisée en ce que** le serveur de gestion S transmet au moins un message de réponse ME à l'unité d'utilisateur STBN, ledit message de réponse ME indiquant que la panne détectée est prise en charge par le serveur de gestion S.

15. Méthode selon la revendication 14 **caractérisée en ce que** le message de réponse ME indique les états de l'unité d'utilisateur STBN impliqués dans une panne, une cause probable de ladite panne, une solution ou un réglage particulier à effectuer sur l'unité d'utilisateur STBN pour résoudre la panne.

S

A, J

ME, ME1, ME2, ME3 | DE, DE1, DE2, DE3

FS, DE3 ME3

FS

R

STB3

FS, DE2 ME2

STB2

FS, DE1 ME1

STB1

FS, ME | DE

STBN

CT

SU

M

DE

DE

Fig. 1

Europäisches
Patentamt

European
Patent Office

Office européen
des brevets

**RAPPORT DE RECHERCHE EUROPEENNE**

Numéro de la demande

EP 13 17 2086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2006/108685 A2 (THOMSON LICENSING [FR]; STRAUB GILLES [FR]; BURKLIN HELMUT [FR]) 19 octobre 2006 (2006-10-19) * le document en entier * ----- | 1-15 | INV. H04L12/24 |
| A | US 2009/158096 A1 (ALI MAHER [US] ET AL) 18 juin 2009 (2009-06-18) * le document en entier * ----- | 1-15 | |
| A | WO 01/52173 A1 (ERINMEDIA INC [US]) 19 juillet 2001 (2001-07-19) * abrégé * * page 5, ligne 13 - page 6, ligne 2 * ----- | 1-15 | |

| DOMAINES TECHNIQUES RECHERCHES (IPC) |
|---|
| H04L H04N G06Q |

Le présent rapport a été établi pour toutes les revendications

| Lieu de la recherche | Date d'achèvement de la recherche | Examinateur |
|---|---|---|
| Munich | 7 août 2013 | Le Bras, Patrick |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 17 2086

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2013

| Document brevet cité au rapport de recherche | Date de publication | Membre(s) de la famille de brevet(s) | Date de publication |
|---|---|---|---|
| WO 2006108685 A2 | 19-10-2006 | CN 101160834 A | 09-04-2008 |
| | | EP 1869833 A2 | 26-12-2007 |
| | | JP 5087535 B2 | 05-12-2012 |
| | | JP 2008536415 A | 04-09-2008 |
| | | JP 2013009383 A | 10-01-2013 |
| | | KR 20070120987 A | 26-12-2007 |
| | | US 2009064268 A1 | 05-03-2009 |
| | | WO 2006108685 A2 | 19-10-2006 |
| US 2009158096 A1 | 18-06-2009 | AUCUN | |
| WO 0152173 A1 | 19-07-2001 | AU 3445601 A | 24-07-2001 |
| | | EP 1257962 A1 | 20-11-2002 |
| | | US 2002087967 A1 | 04-07-2002 |
| | | US 2003055759 A1 | 20-03-2003 |
| | | US 2003105693 A1 | 05-06-2003 |
| | | US 2003105694 A1 | 05-06-2003 |
| | | US 2003110109 A1 | 12-06-2003 |
| | | US 2003149649 A1 | 07-08-2003 |
| | | WO 0152173 A1 | 19-07-2001 |

EPO FORM P0460

Pour tout renseignement concernant cette annexe : voir Journal Officiel de l'Office européen des brevets, No.12/82

**EP 2 814 202 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010010586 A1
- US 20050138667 A